# EUROPÄISCHE PATENTSCHRIFT

(11) **EP 1 601 914 B1**
(45) Veröffentlichungstag und Bekanntmachung des Hinweises auf die Patenterteilung: **11.10.2006**
(21) Anmeldenummer: 03789372.4
(22) Anmeldetag: 20.12.2003
(51) Int. Cl.: F24D 19/08, F16K 24/00

(54) **ENTLÜFTUNGSVENTIL FÜR HEIZKÖRPER MIT EINEM HALTEKÖRPER UND EINEM AXIAL VERSTELLBAREN VENTILKÖRPER**
VENTILATION VALVE FOR HEATERS, COMPRISING A HOLDING BODY AND AN AXIALLY DISPLACEABLE VALVE BODY
SOUPAPE DE VENTILATION DESTINEE A DES RADIATEURS ET COMPRENANT UN CORPS DE FIXATION ET UN CORPS DE SOUPAPE DEPLACABLE AXIALEMENT

(30) Priorität: 13.03.2003 DE 20303986 U
(43) Veröffentlichungstag der Anmeldung: 07.12.2005
(73) Patentinhaber: Anton Hummel Verwaltungs GmbH, 79183 Waldkirch (DE)
(72) Erfinder: GREINER, Manfred, 79263 Simonswald (DE); BARTHOLOMÄ, Mario, 79297 Winden (DE); BARTHOLOMÄ, Daniel, 79215 Biederbach (DE)
(74) Vertreter: Patent- und Rechtsanwaltssozietät Maucher, Börjes & Kollegen
(86) Internationale Anmeldenummer: PCT/EP2003/014681
(87) Internationale Veröffentlichungsnummer: WO 2004/081457

(56) Entgegenhaltungen:
- DE-U- 6 751 165
- FR-A- 1 488 411
- GB-A- 484 766
- DATABASE WPI Section PQ, Week 199301 Derwent Publications Ltd., London, GB; Class Q66, AN 1993-007611 XP002277555 -& SU 1 712 734 A (ZABOLOTNYI A P), 15. Februar 1992 (1992-02-15)

## Beschreibung

Die Erfindung betrifft ein Entlüftungsventil für Heizkörper oder Heizanlagen mit einem in einer Öffnung oder Gewindeöffnung des Heizkörpers oder der Heizanlage anbringbaren Haltekörper und mit einem an diesem Haltekörper axial verstellbaren Ventilkörper, der in Ausgangslage einen Entlüftungsdurchgang oder Entlüftungskanal verschließt und nach axialer Verstellung freigibt, wobei der Entlüftungskanal einen von einer axialen Orientierung abweichenden, schrägen und/oder abgewinkelten und/oder gegebenenfalls gekrümmten Verlauf hat und im Inneren des Heizkörpers oder der Heizanlage in Gebrauchsstellung eine Eintrittsöffnung aufweist, die höher als seine außenseitige Austrittsöffnung angeordnet ist, wobei der Entlüftungskanal in dem Ventilkörper selbst angeordnet ist, wobei der Ventilkörper relativ zu dem Haltekörper axial gegen eine Rückstellkraft verstellbar ist, wobei die obere Eintrittsöffnung in den Entlüftungskanal in Schließstellung innerhalb des Haltekörpers und nach der axialen Verstellung aus diesem zum Inneren des Heizkörpers oder der Heizanlage herausbewegt ist und wobei der Ventilkörper und der Haltekörper relativ zueinander in Drehrichtung einstellbar sind.

Ein derartiges Entlüftungsventil ist aus DATABASE WPI Section PQ, Week 199301 Derwent Publications Ltd., London, GB; Class Q66, AN 1993-007611 XP002277555 -& SU 1 712 734 A (ZABOLOTNYI A P) 15. Februar 1992 (1992-02-15) für Heizanlagen bekannt. Der Ventilkörper ist dabei relativ zu dem Haltekörper durch ein Gewinde verstellbar, wobei von einem koaxialen Entlüftungskanal rechtwinklige Queröffnungen einerseits nahe dem Inneren des Heizkörpers und andererseits im Bereich einer in dem Haltekörper angeordneten Entlüftungsöffnung abgehen. Für eine Entlüftung muss also der Ventilkörper durch eine Schraubbewegung verstellt werden, wobei zuvor schon bei der Anbringung des Haltekörpers durch Einschrauben darauf geachtet werden muss, dass die zur Entlüftung dienenden Öffnungen und Kanäle in Gebrauchsstellung so angeordnet sind, dass sie eine möglichst hohe Eintrittsöffnung haben, um beim Entlüften möglichst viel Luft ablassen zu können. Für die Verdrehung des Ventilkörpers bei der Durchführung der Schraubbewegung muss ein Werkzeug oder ein Handrad vorgesehen werden.

Es besteht deshalb die Aufgabe, ein Entlüftungsventil der eingangs genannten Art zu schaffen, bei welchem die Anordnung des Entlüftungskanals in der gewünschten Position vereinfacht ist und besondere Werkzeuge für den Entlüftungsvorgang entbehrlich sind.

Zur Lösung dieser Aufgabe ist bei einem Entlüftungsventil der eingangs definierten Art vorgesehen, dass der Ventilkörper für den Entlüftungsvorgang zum axialen Verstellen verschiebbar und in den Haltekörper gegen die Rückstellkraft eindrückbar ist.

Dadurch werden besondere Werkzeuge für den Entlüftungsvorgang entbehrlich. Die Bedienung ist sehr einfach, denn es genügt, den Ventilkörper gegen die Rückstellkraft tiefer in den Haltekörper einzudrücken, bis die an den Ventilkörper vorgesehene Eintrittsöffnung in den Entlüftungskanal mit dem Inneren des Heizkörpers oder der Heizanlage unmittelbar in Verbindung tritt, so dass dort vorhandene überschüssige Luft dann austreten kann. Der Entlüftungsvorgang kann durch Loslassen des Ventilkörpers auf einfache Weise auch wieder beendet werden, weil er dann durch die Rückstellkraft wieder in seine Schließstellung zurückbewegt wird.

Da im Gegensatz zu SU 1 712 734 A1 zwischen Ventilkörper und Haltekörper kein Gewinde vorgesehen ist, kann der Ventilkörper relativ zu dem in den Heizkörper oder die Heizanlage eingesetzten Haltekörper nachträglich so eingestellt oder verdreht werden, dass die Austrittsöffnung eine möglichst tiefe und vor allem die Eintrittsöffnung eine möglichst hohe Position im Inneren des Heizkörpers oder der Heizanlage erhält. Zum Entlüften genügt es dann, den Ventilkörper selbst in der schon erwähnten Weise axial in das Innere der Heizanlage oder des Heizkörpers zu verschieben, damit die zunächst innerhalb des Haltekörpers unzugängliche Eintrittsöffnung in den Entlüftungskanal in das Innere so verschoben wird, dass dort überschüssige Luft in die Eintrittsöffnung eintreten und durch den Entlüftungskanal austreten kann. Nach dem Entlüftungsvorgang genügt es, den Ventilkörper wieder in seine Schließstellung zurückgelangen zu lassen, was durch die Rückstellkraft automatisch erfolgen kann.

Besonders günstig ist es, wenn der Ventilkörper zur relativen Einstellung gegenüber dem Haltekörper verdrehbar ist. Verläuft der Entlüftungskanal in einer vorbekannten Weise von einer hochliegenden Eintrittsöffnung zu einer möglichst tiefliegenden Austrittsöffnung, genügt es, den Ventilkörper mit der Austrittsöffnung, die von außen her sichtbar ist, so zu verdrehen, dass die Eintrittsöffnung automatisch möglichst hoch liegt. Die Austrittsöffnung kann also bei der Einstellung des den Entlüftungskanal enthaltenden Ventilkörpers als Markierung dienen und benutzt werden.

Für die Erzeugung der Rückstellkraft kann zwischen Haltekörper und Ventilkörper eine Rückstellfeder, insbesondere eine Druckfeder, vorzugsweise - für einen bei seiner Betätigung geradlinig axial verschiebbaren oder bewegbaren Ventilkörper - eine Schraubenfeder vorgesehen sein, die beim Einschieben oder Eindrücken des Ventilkörpers spannbar ist. Dies ergibt eine äußerst einfache und dabei preiswerte Konstruktion.

Der Entlüftungskanal kann geradlinig und schräg von der oberen Eintrittsöffnung zur unteren Austrittsöffnung verlaufend ausgebildet sein. Dies ergibt eine besonders einfache und dennoch effektive Ausbildung des Entlüftungskanals, bei welcher gleichzeitig die Austrittsöffnung als Markierung dienen kann, weil eine tiefste Lage der Austrittsöffnung automatisch eine höchste Lage der Eintrittsöffnung bedeutet. Somit ist diese Ausführungsform die am meisten zu bevorzugende Lösung der vorstehend erwähnten Aufgabe.

Um ungewollte Leckagen zu vermeiden, ist es zweckmäßig, wenn die Eintrittsöffnung in den Entlüftungskanal in ihrer Ruhe- oder Schließposition gegenüber dem Haltekörper und damit gegenüber dem Inneren des Heizkörpers oder der Heizanlage abgedichtet ist.

Dabei ist es besonders vorteilhaft und zweckmäßig, wenn die Eintrittsöffnung an der Umfangsfläche des Ventilkörpers benachbart zu seiner Stirnseite angeordnet ist. Somit kann die Eintrittsöffnung in Ruhestellung innerhalb des Haltekörpers von diesem gegenüber dem Inneren des Heizkörpers abgeschirmt angeordnet sein, was auch eine entsprechende zusätzliche Abdichtung vereinfacht.

Beispielsweise kann zum - zusätzlichen - Abdichten der Eintrittsöffnung in den Entlüftungskanal auf der dem Inneren des Heizkörpers zugewandten ringförmigen Stirnseite des Haltekörpers zwischen diesem und der benachbarten Umfangsfläche des Ventilkörpers und dabei zwischen der Eintrittsöffnung und
der zum Inneren des Heizkörpers oder der Heizanlage gerichteten Stirnseite des Ventilkörpers ein umlaufender Dichtring vorgesehen sein. Dies ergibt eine sehr effektive Abdichtung zwischen dem Inneren des Heizkörpers oder der Heizanlage und der Eintrittsöffnung. Dennoch ergibt eine axiale Verstellung des Ventilkörpers - zusammen mit dem Dichtring - in das Innere des Heizkörpers eine freie Zugänglichkeit zu der Eintrittsöffnung in Entlüftungsposition.

Auf der der Außenseite des Heizkörpers oder der Heizanlage zugewandten Seite der Eintrittsöffnung in den Entlüftungskanal kann ein weiterer an dem Ventilkörper umlaufender Dichtring vorgesehen sein. Dies verbessert die Abdichtung und verhindert auch während des Entlüftungsvorganges einen Austritt von Heizflüssigkeit zwischen Haltekörper und Ventilkörper, weil dieser zweite Dichtring bei dem Entlüftungsvorgang im Inneren des Haltekörpers verbleibt.

Der/die Dichtringe können in einer Ringnut an dem Haltekörper und/oder an dem Ventilkörper angeordnet sein. Besonders günstig ist eine Anordnung in Ringnuten des Ventilkörpers, weil dadurch auch die Montage sowie erforderlichenfalls ein Ersatz eines oder beider Dichtringe erleichtert sind.

Der für die Abdichtung besonders wichtige, an der Stirnseite des Haltekörpers angeordnete Dichtring ist zweckmäßigerweise in einer Ringnut des Ventilkörpers angeordnet und von einem auf der dem Haltekörper abgewandten Seite angeordneten Sicherungs- oder Sprengring gehalten, der gleichzeitig zumindest mittelbar über den Dichtring als axialer Anschlag des Ventilkörpers an dem innenseitigen Ende des Haltekörpers und/oder als axiale Abstützung für den Dichtring dient. Der Sicherungs- oder Sprengring hat also eine Doppelfunktion, weil er einerseits verhindert, dass der Ventilkörper axial aus dem Haltekörper zu weit zurückverstellt oder gar herausgezogen werden kann, und weil er gleichzeitig auch den Dichtring an der Stirnseite des Haltekörpers auch gegenüber dem Ventilkörper festlegt und so den Dichtring einspannt.

Es sei erwähnt, dass der oder die Dichtringe zweckmäßigerweise O-Ringe sein können, die preiswert in nahezu beliebigen Größen erhältlich sind.

Die Außenabmessung oder der Querschnitt des Ventilkörpers kann über seine gesamte in den Haltekörper eingreifende Länge gleich oder kleiner dem Innenquerschnitt der Aufnahmeöffnung des Haltekörpers sein und der Sprengring kann nach dem Einschieben des Ventilkörpers in den dann über den Haltekörper überstehenden Bereich einsetzbar sein oder zusammen mit dem Ventilkörper einschiebbar sein und nach dem Austritt aus dem Haltekörper durch seine Federkraft in die Halte- und Anschlagposition aufspringen. Besonders günstig ist jedoch ein Sprengring, der nach dem Einschieben des Ventilkörpers eingesetzt und durch seine Federkraft innerhalb der entsprechenden Ringnut festgehalten ist.

Die außenseitige Stirnseite des Ventilkörpers kann gegenüber der Innenöffnung des Haltekörpers als Betätigungs- oder Druckfläche vergrößert sein und in Schließstellung des Entlüftungsventils von einem Gegenanschlag des Haltekörpers einen dem Verstell- oder Schiebeweg des Ventilkörpers in seine Offenstellung entsprechenden Abstand haben. Dies erleichtert die Bedienung, da der Benutzer eine ausreichend große Druckfläche zur Verfügung hat, deren Vergrößerung gegenüber dem übrigen Querschnitt des Ventilkörpers gleichzeitig auch als Anschlag zur Begrenzung der größtmöglichen Verschiebung dienen kann.

Dabei kann die außenliegende Stirnseite des Ventilkörpers in einer erweiterten Öffnung des Haltekörpers ganz oder teilweise versenkt angeordnet sein und insbesondere mit ihrem umlaufenden Rand in dieser erweiterten Öffnung des Haltekörpers geführt sein. Dadurch wird die Führung des Ventilkörpers bei seiner axialen Verstellung verbessert und einem eventuellen Verkanten vorgebeugt. Außerdem erlaubt diese vergrößerte Außenfläche, dass die Austrittsöffnung des Entlüftungskanals an einer Stelle münden kann, die tiefer als die untere Meridianlinie des eigentlichen Ventilkörpers liegt.

Nachstehend ist ein Ausführungsbeispiel der Erfindung anhand der Zeichnung näher beschrieben. Es zeigt in zum Teil schematisierter Darstellung:
- Fig. 1: einen Heizkörper mit einer hervorgehobenen Einzelheit "Z" als Markierung der Anordnung eines erfindungsgemäßen Entlüftungsventils,
- Fig. 2: in vergrößertem Maßstab die Einzelheit "Z" im Längsschnitt mit dem Entlüftungsventil, bei welchem ein Ventilkörper in axialer Richtung verstellbar in einem in den Heizkörper eingeschraubten Haltekörper angeordnet und in Offenstellung bewegt ist,
- Fig. 3: in weiter vergrößertem Maßstab das Entlüftungsventil in Offenstellung, in welcher der Ventilkörper gegenüber dem Haltekörper in axialer Richtung eingedrückt ist, wodurch eine Rückstellfeder gespannt ist, sowie
- Fig. 4: eine der Fig.3 entsprechende Darstellung nach dem Nachlassen des Drucks, mit welchem der Ventilkörper in Offenstellung verstellt wurde, wodurch er durch die Rückstellfeder wieder in Schließstellung verschoben ist.

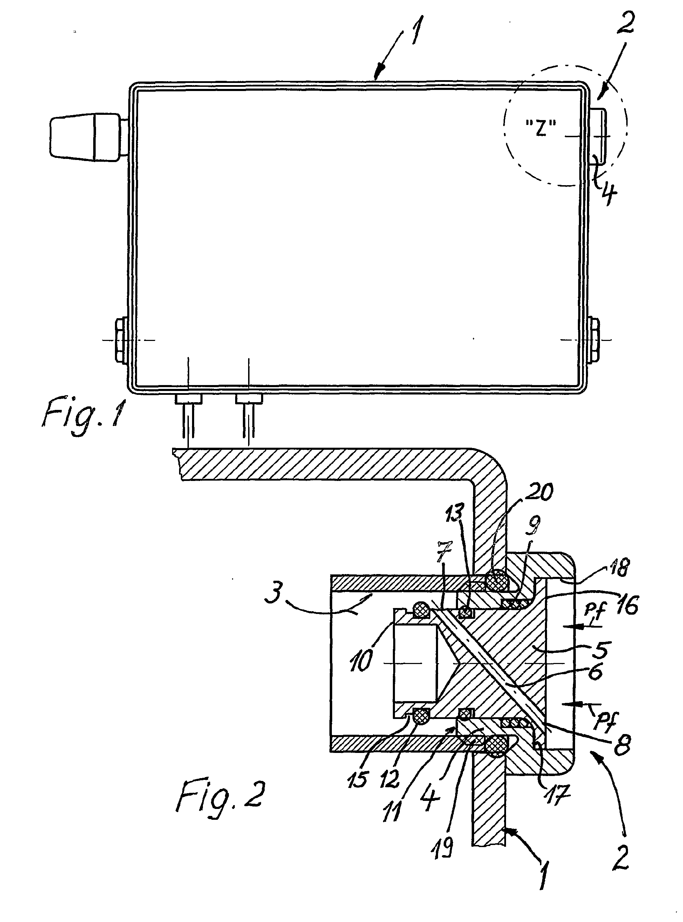

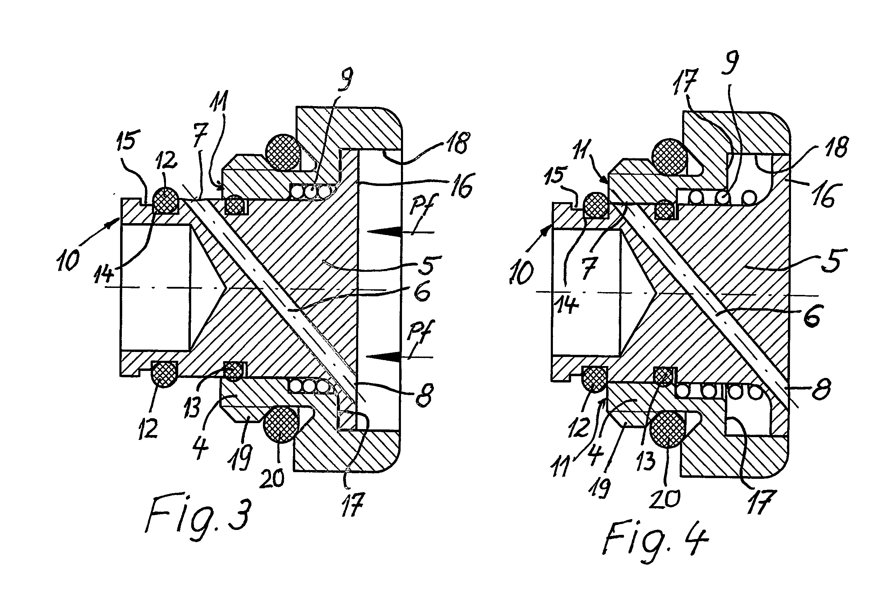

An einem Heizkörper 1 ist ein im Ganzen mit 2 bezeichnetes Entlüftungsventil vorgesehen, welches gemäß Fig.2 einen in einer Gewindeöffnung 3 des Heizkörpers 1 anbringbaren Haltekörper 4 und einen gegenüber diesem Haltekörper 4 axial verstellbaren Ventilkörper 5 aufweist, der in Ausgangslage gemäß Fig. 4 einen Entlüftungsdurchgang oder Entlüftungskanal 6 verschließt und nach axialer Verstellung gemäß Fig.2 und 3 für einen Entlüftungsvorgang freigibt, wobei der Entlüftungskanal 6 einen von einer axialen Orientierung abweichenden schrägen Verlauf hat und im Inneren des Heizkörpers 1 - oder gegebenenfalls einer Heizanlage - in Gebrauchsstellung eine Eintrittsöffnung 7 aufweist, die höher als seine außenseitige Austrittsöffnung 8 angeordnet ist. Im Ausführungsbeispiel ist vorgesehen, dass die Eintrittsöffnung 7 an der höchstmöglichen Stelle vorgesehen ist, um eine entsprechend effektive Entlüftung des Heizkörpers 1 zu ermöglichen.

Dabei erkennt man in den Figuren, dass dieser Entlüftungskanal 6 nicht in dem Haltekörper 4, sondern in dem Ventilkörper 5 selbst angeordnet ist und dass der Ventilkörper 5 relativ zu dem Haltekörper 4 axial gegen eine noch zu erläuternde Rückstellkraft verstellbar und verschiebbar ist. Dies wird vor allem beim Vergleich der Fig.3 und 4 deutlich.

Ferner erkennt man in der Fig.4, dass die obere Eintrittsöffnung 7 in den Entlüftungskanal 6 in Schließstellung innerhalb des Haltekörpers 4 und dadurch unzugänglich und nach dem axialen Verstellen aus diesem in das Innere des Heizkörpers 1 herausbewegt ist, so dass dann überschüssige Luft aus dem Heizkörper 1 durch den Entlüftungskanal 6 und dessen Eintrittsöffnung 7 zu der Austrittsöffnung 8 und damit ins Freie gelangen kann.

Dabei sind der Ventilkörper 5 und der Haltekörper 4 relativ zueinander in Drehrichtung einstellbar, damit die schräge Anordnung des Entlüftungskanals 6 möglichst effektiv so gestaltet werden kann, dass die Eintrittsöffnung 7 möglichst hoch liegt, wie dies in den Fig.2 bis 4 dargestellt ist.

Aufgrund kreisrunder Querschnitte des Ventilkörpers 5 und der ihn aufnehmenden Innenöffnung des Haltekörpers 4 ist dabei der Ventilkörper 5 zur relativen Einstellung gegenüber dem Haltekörper 4 verdrehbar, so dass der Benutzer nur die Austrittsöffnung 8 in eine untere Position verdrehen muss, um sicher zu sein, dass die Eintrittsöffnung 7 im Inneren möglichst hoch liegt.

Beim Vergleich der Fig.3 und 4 wird deutlich, dass der Ventilkörper 5 für den Entlüftungsvorgang zum axialen Verstellen verschiebbar und in den Haltekörper 4 und damit den Heizkörper 1 gegen die schon erwähnte Rückstellkraft eindrückbar ist. Diese Eindrückkraft ist dabei schematisiert in Fig.2 und 3 durch die beiden Pfeile PF angedeutet.

Für die Erzeugung der schon erwähnten Rückstellkraft zwischen Haltekörper 4 und Ventilkörper 5 ist im Ausführungsbeispiel eine Rückstellfeder 9 in Form einer Druckfeder vorgesehen, die dabei als Schraubenfeder ausgebildet ist und beim Einschieben oder Eindrücken des Ventilkörpers 5 gespannt wird.

Für eine einfache Herstellung und gleichzeitig effektive Entlüftung ist der Entlüftungskanal 6 geradlinig und schräg von der oberen Eintrittsöffnung 7 zur Austrittsöffnung 8 durch die Mitte des Ventilkörpers 5 verlaufend ausgebildet, wie es in den Fig.2 bis 4 ebenfalls gut erkennbar ist. Die Eintrittsöffnung 7 in den Entlüftungskanal 6 ist dabei in ihrer Ruhe- oder Schließposition gemäß Fig.4 gegenüber dem Haltekörper 4 und damit gegenüber dem Inneren des Heizkörpers 1 oder einer Heizanlage abgedichtet, so dass ein ungewollter Austritt irgendeines Mediums aus dem Heizkörper 1 oder einer Heizanlage vermieden wird.

In besonders günstiger Weise ist dabei die Eintrittsöffnung 8 an der Umfangsfläche des Ventilkörpers benachbart zu seiner Stirnseite 10 angeordnet und zwar an einer solchen Stelle der Umfangsfläche des Ventilkörpers 5, die in Schließstellung im Inneren des Haltekörpers 4 zu liegen kommt, so dass die Eintrittsöffnung 8 in Schließstellung von der Innenwandung des Haltekörpers 4 abgedeckt und abgedichtet ist.

Damit eine Fertigung der Teile auch mit größeren Toleranzen möglich ist und dennoch eine ausreichende Dichtigkeit vorliegt, ist außerdem zum Abdichten der Eintrittsöffnung 8 in den Entlüftungskanal 6 auf der dem Inneren des Heizkörpers 1 zugewandten Ring- oder Stirnfläche 11 des Haltekörpers 4 zwischen diesem und der benachbarten Umfangsfläche des Ventilkörpers 5 und dabei zwischen der Eintrittsöffnung 8 und der zum Inneren des Heizkörpers 1 oder der Heizanlage gerichteten Stirnseite 10 des Ventilkörpers 5 ein umlaufender Dichtring 12 vorgesehen. Man erkennt diese Anordnung besonders gut in Fig.4. Dieser Dichtring 12, der zweckmäßigerweise ein O-Ring ist, dichtet also die stirnseitige Fuge zwischen Ventilkörper 5 und Halterkörper 4 in Schließstellung des Entlüftungsventils 1 ab, so dass ein Zutritt zu dem im Inneren des Haltekörpers 4 befindlichen Entlüftungskanal 6 und seiner Eintrittsöffnung 8 verhindert wird, und wird beim Öffnen des Entlüftungsventils 1 mit dem Ventilkörper 5 zusammen in das Innere des Heizkörpers 1 bewegt.

Damit auch während des Entlüftungsvorgangs gemäß Fig.2 und 3 kein Heizwasser aus dem Entlüftungsventil zwischen Haltekörper 4 und Ventilkörper 5 austreten kann, ist außerdem auf der der Außenseite des Heizkörpers 1 zugewandten Seite der Eintrittsöffnung 8 in den Entlüftungskanal 6 ein weiterer, an dem Ventilkörper 5 umlaufender Dichtring 13 vorgesehen, der auch während des Entlüftungsvorgangs gemäß Fig. 3 im Inneren des Haltekörpers 4 - zumindest teilweise oder gemäß Fig.3 vollständig - verbleibt.

Dabei erkennt man im Ausführungsbeispiel, dass die Dichtringe 12 und 13 in jeweils einer Ringnut an dem Ventilkörper 5 angeordnet sind, also zusammen mit diesen verschoben werden. Denkbar wäre allerdings auch, dass beispielsweise der Dichtring 13 in einer im Inneren des Haltekörpers 4 angeordneten Ringnut gewissermaßen stationär angeordnet ist.

Vor allem der nahe der Stirnseite 10 des Ventilkörpers und in Schließstellung an der Stirnseite 11 des Haltekörpers 4 angeordnete Dichtring 12 ist in einer Ringnut 14 des Ventilkörpers 5 angeordnet und kann auf der dem Haltekörper 4 abgewandten Seite durch einen der besseren Übersicht wegen nicht dargestellten Sicherungs- oder Sprengring gehalten und abgestützt werden. Man erkennt an dem Ventilkörper 5 im Ausführungsbeispiel benachbart zu dem Dichtring 12 eine weitere Ringnut 15 mit größerem Innenradius gegenüber der Ringnut 14, worin ein solcher Sprengring eingesetzt werden soll und kann. Ein derartiger Sprengring kann also gleichzeitig zumindest mittelbar über den Dichtring 12 als axialer Anschlag des Ventilkörpers 5 an dem innenseitigen Ende 11 des Haltekörpers 4 und auch als axiale Abstützung für den Dichtring 12 dienen.

Die Außenabmessung oder der Querschnitt des Ventilkörpers 5 ist über seine gesamte in den Haltekörper 4 eingreifende Länge gleich oder kleiner dem Innenquerschnitt der schon erwähnten Aufnahmeöffnung des Haltekörpers 4 und zwar auch im Bereich der Stirnseite 10 benachbart zu der Ringnut 15 und der Ringnut 14. Somit kann der Ventilkörper 5 in axialer Richtung in den Haltekörper 4 eingeschoben werden, wonach dann der Sprengring in die Nut 15 eingesetzt werden kann, die sich in einem Bereich des Ventilkörpers 5 befindet, der sowohl in Schließstellung als auch erst recht in Offenstellung des Entlüftungsventils 1 gegenüber der Stirnseite 11 des Haltekörpers übersteht. Danach kann das Entlüftungsventil in die Öffnung 3 eingesetzt, insbesondere eingeschraubt werden.

Die außenseitige Stirnseite 16 des Ventilkörpers 5 ist gegenüber der Innenöffnung des Haltekörpers 4 als Betätigungs- oder Druckfläche vergrößert, was vor allem auch die Bedienbarkeit erleichtert. Darüber hinaus kann sie so auch als Anschlag zum Begrenzen des Verschiebeweges des Ventilkörpers 4 während des Öffnungsvorgangs dienen.

Beim Vergleich der Fig.3 und 4 wird deutlich, dass diese vergrößerte Stirnseite 16 in Schließstellung des Entlüftungsventils 1 von einem an dem Haltekörper 4 vorgesehenen Gegenanschlag 17 einen dem Verstell- oder Schiebeweg des Ventilkörpers 5 in seine Offenstellung entsprechenden Abstand hat.

Der Benutzer braucht also beim Entlüften den Ventilkörper 5 über dessen Stirnseite 16 nur so lange einzudrücken, bis es nicht mehr weiter geht, weil dann diese Betätigungs- oder Druckfläche mit ihrem vergrößertem Querschnitt an dem Gegenanschlag 17 zur Anlage kommt. Dadurch ist dann die Eintrittsöffnung 7 aus dem Inneren des Haltekörpers 4 genügend weit herausbewegt, um im Heizkörper 1 befindliche überschüssige Luft austreten zu lassen.

Die außenliegende Stirnseite 16 des Ventilkörpers 5 ist dabei in einer erweiterten Öffnung 18 des Haltekörpers versenkt angeordnet und mit ihrem umlaufenden Rand auch in dieser erweiterten Öffnung 18 des Haltekörpers geführt, so dass ein Verkanten auch während der Betätigung weitestgehend vermieden ist.

Durch den vergrößerten Umfang und Durchmesser dieser Stirnseite 16 kann die Austrittsöffnung 8 des Entlüftungskanals 6 an einer Stelle münden, die tiefer als die untere Meridianlinie des Ventilkörpers 5 liegt. Der schräg verlaufende Entlüftungskanal 6 kann also entsprechend steil angeordnet werden, um die axiale Länge des Ventilkörpers 5 in Grenzen zu halten. Da der Ventilkörper 5 relativ zu dem Haltekörper 4 verdreht werden kann, kann der Haltekörper 4 mit seinem Gewinde 19 in die entsprechende Öffnung 3 des Heizkörpers 1 eingeschraubt und dabei mittels einer Dichtung 20 abgedichtet werden, ohne dass auf den Verlauf des Entlüftungskanals 6 Rücksicht genommen werden muss, weil dieser nachträglich in die optimale Position eingestellt und verdreht werden kann. Diese optimale Position ergibt sich durch den schrägen Verlauf des Entlüftungskanal 6 von seiner Eintrittsöffnung 7 zu der Austrittsöffnung 8 durch die Mitte des Ventilkörpers von selbst, wenn die Austrittsöffnung 8 die tiefste mögliche Position bekommt.

## Patentansprüche

1. Entlüftungsventil (2) für Heizkörper (1) oder Heizanlagen mit einem in einer Öffnung oder Gewindeöffnung (3) des Heizkörpers (1) oder der Heizanlage anbringbaren Haltekörper (4) und mit einem an diesem Haltekörper (4) axial verstellbaren Ventilkörper (5), der in Ausgangslage einen Entlüftungskanal (6) verschließt und nach axialer Verstellung freigibt, wobei der Entlüftungskanal (6) einen von einer axialen Orientierung abweichenden, schrägen und/oder abgewinkelten und/oder gegebenenfalls gekrümmten Verlauf hat und im Inneren des Heizkörpers (1) oder der Heizanlage in Gebrauchsstellung eine Eintrittsöffnung (7) aufweist, die höher als seine außenseitige Austrittsöffnung (8) angeordnet ist, wobei der Entlüftungskanal (6) in dem Ventilkörper (5) selbst angeordnet ist, wobei der Ventilkörper (5) relativ zu dem Haltekörper (4) axial gegen eine Rückstellkraft verstellbar ist, wobei die obere Eintrittsöffnung (7) in den Entlüftungskanal (6) in Schließstellung innerhalb des Haltekörpers (4) und nach der axialen Verstellung aus diesem zum Inneren des Heizkörpers (1) oder der Heizanlage herausbewegt ist und wobei der Ventilkörper (5) und der Haltekörper (4) relativ zueinander in Drehrichtung einstellbar sind, **dadurch gekennzeichnet, dass** der Ventilkörper (5) für den Entlüftungsvorgang zum axialen Verstellen verschiebbar und in den Haltekörper (4) gegen die Rückstellkraft eindrückbar ist.

2. Entlüftungsventil nach Anspruch 1, **dadurch gekennzeichnet, dass** der Ventilkörper (5) zur relativen Einstellung gegenüber dem Haltekörper (4) verdrehbar ist.

3. Entlüftungsventil nach einem der Ansprüche 1 oder 2, **dadurch gekennzeichnet, dass** für die Erzeugung der Rückstellkraft zwischen Haltekörper (4) und Ventilkörper (5) eine Rückstellfeder insbesondere eine Druckfeder (9), vorzugsweise eine Schraubenfeder vorgesehen ist, die beim Einschieben oder Eindrücken des Ventilkörpers (5) spannbar ist.

4. Entlüftungsventil nach einem der Ansprüche 1 bis 3, **dadurch gekennzeichnet, dass** der Entlüftungskanal (6) geradlinig und schräg von der oberen Eintrittsöffnung (7) zur unteren Austrittsöffnung (8) verlaufend ausgebildet ist.

5. Entlüftungsventil nach einem der Ansprüche 1 bis 4, **dadurch gekennzeichnet, dass** die Eintrittsöffnung (7) in den Entlüftungskanal (6) in ihrer Ruhe- oder Schließposition gegenüber dem Haltekörper (4) und damit gegenüber dem Inneren des Heizkörpers (1) oder der Heizanlage abgedichtet ist.

6. Entlüftungsventil nach einem der Ansprüche 1 bis 5, **dadurch gekennzeichnet, dass** die Eintrittsöffnung (7) an der Umfangsfläche des Ventilkörpers (5) benachbart zu seiner Stirnseite (10) angeordnet ist, wobei sie in Schließstellung im Inneren des Haltekörpers (4) liegt.

7. Entlüftungsventil nach einem der Ansprüche 1 bis 6, **dadurch gekennzeichnet, dass** zum Abdichten der Eintrittsöffnung (7) in den Entlüftungskanal (6) auf der dem Inneren des Heizkörpers (1) zugewandten ringförmigen Stirnseite (11) des Haltekörpers (4) zwischen diesem und der benachbarten Umfangsfläche des Ventilkörpers (5) und dabei zwischen der Eintrittsöffnung (7) und der zum Inneren des Heizkörpers (1) oder der Heizanlage gerichteten Stirnseite (10) des Ventilkörpers (5) ein umlaufender Dichtring (12) vorgesehen ist.

8. Entlüftungsventil nach Anspruch 7, **dadurch gekennzeichnet, dass** auf der der Außenseite des Heizkörpers (1) oder der Heizanlage zugewandten Seite der Eintrittsöffnung (7) in den Entlüftungskanal (6) ein weiterer an dem Ventilkörper (5) umlaufender Dichtring (12) vorgesehen ist.

9. Entlüftungsventil nach Anspruch 7 oder 8, **dadurch gekennzeichnet, dass** der/die Dichtringe (12, 13) in einer Ringnut an dem Haltekörper (4) und/oder an dem Ventilkörper (5) angeordnet ist/sind.

10. Entlüftungsventil nach einem der Ansprüche 7 bis 9, **dadurch gekennzeichnet, dass** der an der Stirnseite (11) des Haltekörpers (4) angeordnete Dichtring (12) in einer Ringnut (14) des Ventilkörpers (5) angeordnet und von einem auf der dem Haltekörper (4) abgewandten Seite angeordneten Sicherungs- oder Sprengring gehalten ist, der gleichzeitig zumindest über den Dichtring (12) als axialer Anschlag des Ventilkörpers (5) an dem innenseitigen Ende des Haltekörpers (4) und/oder als axiale Abstützung für den Dichtring (12) dient.

11. Entlüftungsventil nach Anspruch 10, **dadurch gekennzeichnet, dass** die Außenabmessung oder der Querschnitt des Ventilkörpers (5) über seine gesamte in den Haltekörper (4) eingreifende Länge gleich oder kleiner dem Innenquerschnitt der Aufnahmeöffnung des Haltekörpers (4) ist und dass der Sprengring nach dem Einschieben des Ventilkörpers in den dann über den Haltekörper überstehenden Bereich einsetzbar ist oder zusammen mit dem Ventilkörper einschiebbar ist und nach dem Austritt aus dem Haltekörper durch seine Federkraft in die Halte- und Anschlagposition aufspringt.

12. Entlüftungsventil nach einem der Ansprüche 1 bis 11, **dadurch gekennzeichnet, dass** die außenseitige Stirnseite (16) des Ventilkörpers (5) gegenüber der Innenöffnung des Haltekörpers (4) als Betätigungs- oder Druckfläche vergrößert ist und in Schließstellung des Entlüftungsventil von einem Gegenanschlag (17) des Haltekörpers einen dem Verstell- oder Schiebeweg des Ventilkörpers (5) in seine Offenstellung entsprechenden Abstand hat.

13. Entlüftungsventil nach einem der Ansprüche 1 bis 12, **dadurch gekennzeichnet, dass** die außenliegende Stirnseite (16) des Ventilkörpers (5) in einer erweiterten Öffnung (18) des Haltekörpers versenkt angeordnet ist und insbesondere mit ihrem umlaufenden Rand in dieser erweiterten Öffnung (18) des Haltekörpers geführt ist.

14. Entlüftungsventil nach einem der Ansprüche 1 bis 13, **dadurch gekennzeichnet, dass** die Austrittsöffnung (8) des Entlüftungskanals (6) an einer Stelle mündet oder angeordnet ist, die tiefer als die untere Meridianlinie des Ventilkörpers (5) und der Innenöffnung des Haltekörpers (4) liegt.

## Claims

1. Ventilation valve (2) for heaters (1) or heating installations, having a holding body (4) which can be mounted in an opening or threaded opening (3) in the heater (1) or heating installation and having a valve body (5) which is axially displaceable on this holding body (4) and which, in its original position, closes off a ventilation channel (6) and after axial displacement opens up said channel (6), wherein the ventilation channel (6) has a configuration which differs from an axial orientation, i.e.has an inclined and/or angled and/or optionally curved configuration, and comprises within the heater (1) or heating installation in the position of use an entry opening (7) which is disposed higher up than the exit opening (8) on the outside, the ventilation channel (6) being arranged in the valve body (5) itself, the valve body (5) being axially movable relative to the holding body (4) counter to a restoring force, while in the closed position the upper entry opening (7) into the ventilation channel (6) is moved within the holding body (4) and after axial displacement is moved out of the holding body (4) into the interior of the heater (1) or heating installation, and wherein the valve body (5) and the holding body (4) are adjustable relative to one another in the direction of rotation, **characterised in that** the valve body (5) is movable for axial displacement for the ventilation process and can be pressed into the holding body (4) counter to the restoring force.

2. Ventilation valve according to claim 1, **characterised in that** the valve body (5) is rotatable relative to the holding body (4) for relative adjustment.

3. Ventilation valve according to one of claims 1 or 2, **characterised in that** in order to generate the restoring force between the holding body (4) and valve body (5), a restoring spring, particularly a compression spring (9), preferably a helical spring, is provided which can be put under stress as the valve body (5) is inserted or pressed in.

4. Ventilation valve according to one of claims 1 to 3, **characterised in that** the ventilation channel (6) is of rectilinear construction, extending diagonally from the upper entry opening (7) to the lower exit opening (8).

5. Ventilation valve according to one of claims 1 to 4, **characterised in that** in its resting or closed position the entry opening (7) into the ventilation channel (6) is sealed off against the holding body (4) and hence from the interior of the heater (1) or the heating installation.

6. Ventilation valve according to one of claims 1 to 5, **characterised in that** the entry opening (7) on the circumferential surface of the valve body (5) is arranged adjacent to its end face (10), and in the closed position is located inside the holding body (4).

7. Ventilation valve according to one of claims 1 to 6, **characterised in that** for the purpose of sealing off the entry opening (7) into the ventilation channel (6), a circumferential sealing ring (12) is provided, on the annular end face (11) of the holding body (4) facing the inside of the heater between said holding body and the adjacent circumferential surface of the valve body (5) and at the same time between the entry opening (7) and the end face (10) of the valve body (5) directed towards the interior of the heater (1) or the heating installation.

8. Ventilation valve according to claim 7, **characterised in that** another sealing ring (12) encircling the valve body (5) is provided on the side of the entry opening (7) into the ventilation channel (6) facing the outside of the heater (1) or heating installation.

9. Ventilation valve according to claim 7 or 8, **characterised in that** the sealing ring/rings (12, 13) is/are provided in an annular groove on the holding body (4) and/or on the valve body (5).

10. Ventilation valve according to one of claims 7 to 9, **characterised in that** the sealing ring (12) provided on the end face (11) of the holding body (4) is arranged in an annular groove (14) of the valve body (5) and is held by a securing or spring ring mounted on the side remote from the holding body (4), which simultaneously acts, at least over the sealing ring (12), as an axial abutment for the valve body (5) on the inner end of the holding body (4) and/or as an axial support for the sealing ring (12).

11. Ventilation valve according to claim 10, **characterised in that** the external dimension or the cross section of the valve body (5) over its entire length engaging in the holding body (4) is less than or equal to the internal cross section of the receiving opening of the holding body (4) and **in that** the spring ring can be inserted into the area projecting over the holding body after the valve body has been pushed in or can be pushed in together with the valve body and after moving out of the holding body it jumps into the holding and abutment position as a result of its spring force.

12. Ventilation valve according to one of claims 1 to 11, **characterised in that** the external end face (16) of the valve body (5) is made larger than the internal opening of the holding body (4) as an actuating or pressure surface and in the closed position of the ventilation valve is at a spacing from a mating abutment (17) of the holding body that corresponds to the distance of displacement or travel of the valve body (5) into its open position.

13. Ventilation valve according to one of claims 1 to 13, **characterised in that** the external end face (16) of the valve body (5) is disposed in a lower position in an enlarged opening (18) in the holding body and in particular is guided with its encircling edge in this enlarged opening (18) in the holding body.

14. Ventilation valve according to one of claims 1 to 13, **characterised in that** the exit opening (8) of the ventilation channel (6) opens out or is disposed at a location which is below the lower meridian line of the valve body (5) and the internal opening of the holding body (4).

## Revendications

1. Soupape de ventilation (2) destinée à des radiateurs (1) ou des installations de chauffage avec un corps de fixation (4) pouvant être inséré dans une ouverture ou une ouverture filetée (3) du radiateur (1) ou de l'installation de chauffage et avec un corps de soupape (5) déplaçable axialement sur ce corps de fixation (4) qui obture un conduit de ventilation (6) en position initiale et qui le libère après un déplacement axial, le conduit de ventilation (6) présentant un tracé en biais et/ou replié et/ou éventuellement recourbé qui dévie d'une orientation axiale et comporte, en position d'utilisation à l'intérieur du radiateur (1) ou de l'installation de chauffage, une ouverture d'entrée (7) qui est disposée plus haute que son ouverture de sortie (8) du côté extérieur, le conduit de ventilation (6) étant disposé dans le corps de soupape (5) lui-même, le corps de soupape (5) étant déplaçable axialement par rapport au corps de fixation (4) contre une force de rappel, l'ouverture d'entrée supérieure (7) étant déplacée dans le conduit de ventilation (6) en position de fermeture à l'intérieur du corps de fixation (4) et, après le déplacement axial, est déplacée hors de celui-ci vers l'intérieur du radiateur (1) ou de l'installation de chauffage et le corps de soupape (5) et le corps de fixation (4) étant réglables l'un par rapport à l'autre dans le sens de rotation, **caractérisée en ce que**, pour le processus de ventilation, le corps de soupape (5) peut être décalé pour le déplacement axial et enfoncé dans le corps de fixation (4) contre la force de rappel.

2. Soupape de ventilation selon la revendication 1, **caractérisée en ce que** le corps de soupape (5) peut être tourné pour son réglage par rapport au corps de fixation (4).

3. Soupape de ventilation selon l'une quelconque des revendications 1 ou 2, **caractérisée en ce que**, pour générer la force de rappel entre le corps de fixation (4) et le corps de soupape (5), il est prévu un ressort de rappel, en particulier un ressort de pression (9), de préférence un ressort à boudin, qui peut être tendu lors de l'insertion ou de l'enfoncement du corps de soupape (5).

4. Soupape de ventilation selon l'une quelconque des revendications 1 à 3, **caractérisée en ce que** le conduit de ventilation (6) est configuré pour s'étendre en ligne droite et en biais entre l'ouverture d'entrée supérieure (7) et l'ouverture de sortie inférieure (8).

5. Soupape de ventilation selon l'une quelconque des revendications 1 à 4, **caractérisée en ce que**, dans sa position de repos ou de fermeture, l'ouverture d'entrée (7) dans le conduit de ventilation (6) est étanchée par rapport au corps de fixation (4) et, donc, par rapport à l'intérieur du radiateur (1) ou de l'installation de chauffage.

6. Soupape de ventilation selon l'une quelconque des revendications 1 à 5, **caractérisée en ce que** l'ouverture d'entrée (7) est disposée sur la surface circonférentielle du corps de soupape (5) à côté de sa face avant (10), sachant qu'elle se trouve à l'intérieur du corps de fixation (4) en position de fermeture.

7. Soupape de ventilation selon l'une quelconque des revendications 1 à 6, **caractérisée en ce que**, pour étancher l'ouverture d'entrée (7) dans le conduit de ventilation (6), il est prévu une bague d'étanchéité circulaire (12) sur la face avant (11) annulaire du corps de fixation (4) dirigée vers l'intérieur du radiateur (1) entre le corps de fixation et la surface circonférentielle adjacente du corps de soupape (5) et, donc, entre l'ouverture d'entrée (7) et la face avant (10) du corps de soupape (5) dirigée vers l'intérieur du radiateur (1) ou de l'installation de chauffage.

8. Soupape de ventilation selon la revendication 7, **caractérisée en ce qu'**il est prévu une autre bague d'étanchéité circulaire (12) sur le côté de l'ouverture d'entrée (7) dans le conduit de ventilation (6) dirigé vers le côté extérieur du radiateur (1) ou de l'installation de chauffage.

9. Soupape de ventilation selon la revendication 7 ou 8, **caractérisée en ce que** la/les bague/s d'étanchéité (12, 13) est/sont disposée/s dans une rainure annulaire sur le corps de fixation (4) et/ou sur le corps de soupape (5).

10. Soupape de ventilation selon l'une quelconque des revendications 7 à 9, **caractérisée en ce que** la bague d'étanchéité (12) disposée sur la face avant (11) du corps de fixation (4) est disposée dans une rainure annulaire (14) du corps de soupape (5) et maintenue par une bague d'arrêt ou bague de butée disposée sur le côté opposé au corps de fixation (4) qui sert en même temps, au moins au moyen de la bague d'étanchéité (12), de butée axiale du corps de soupape (5) à l'extrémité intérieure du corps de fixation (4) et/ou d'appui axial pour la bague d'étanchéité (12).

11. Soupape de ventilation selon la revendication 10, **caractérisée en ce que** la dimension extérieure ou la section transversale du corps de soupape (5) est identique sur toute sa longueur en prise dans le corps de fixation (4) ou inférieure à la section transversale intérieure de l'ouverture de réception du corps de fixation (4) et **en ce que** la bague de butée peut être insérée, après l'introduction du corps de soupape, dans la zone alors en saillie au-dessus du corps de fixation ou poussée conjointement avec le corps de soupape et **en ce que**, après la sortie hors du corps de fixation, elle revient dans la position de fixation et de butée grâce à sa force de ressort.

12. Soupape de ventilation selon l'une quelconque des revendications 1 à 11, **caractérisée en ce que** la face avant (16) du côté extérieur du corps de soupape (5) est agrandie sous forme de surface d'actionnement ou de pression par rapport à l'ouverture intérieure du corps de fixation (4) et, dans la position de fermeture de la soupape de ventilation, elle est placée à une distance d'une contre-butée (17) du corps de fixation, correspondant à la distance de déplacement ou de poussée du corps de soupape (5) dans sa position d'ouverture.

13. Soupape de ventilation selon l'une quelconque des revendications 1 à 12, **caractérisée en ce que** la face avant (16) du côté extérieur du corps de soupape (5) est noyée dans une ouverture élargie (18) du corps de fixation et guidée dans cette ouverture élargie (18) du corps de fixation, en particulier avec son bord circulaire.

14. Soupape de ventilation selon l'une quelconque des revendications 1 à 13, **caractérisée en ce que** l'ouverture de sortie (8) du conduit de ventilation (6) débouche ou est disposé dans un emplacement qui est placé plus bas que la ligne méridienne inférieure du corps de soupape (5) et de l'ouverture intérieure du corps de fixation (4).
